# EUROPÄISCHE PATENTSCHRIFT

(11) **EP 0 680 931 B1**
(45) Veröffentlichungstag und Bekanntmachung des Hinweises auf die Patenterteilung: **07.10.1998**
(21) Anmeldenummer: 95106840.2
(22) Anmeldetag: 05.05.1995
(51) Int. Cl.: C02F 1/02, C02F 11/18, C02F 11/08, C02F 1/72

(54) **Verfahren zur Behandlung eines organische Bestandteile enthaltenden Mediums**
Process for treating a medium containing organic constituents
Procédé pour le traitement d'un milieu contenant des constituants organiques

(30) Priorität: 05.05.1994 DE 4415911
(43) Veröffentlichungstag der Anmeldung: 08.11.1995
(73) Patentinhaber: Linde Aktiengesellschaft, 65189 Wiesbaden (DE); SOLVAY INTEROX (Société Anonyme), B-1050 Bruxelles (BE)
(72) Erfinder: Baur, Karl, Dr. rer. nat., D-82065 Baierbrunn (DE); Gregor, Karl-Gregor, Dr. rer. nat., B-1730 Mollem-Asse (BE); Luft, Gerhard, Prof. Dr. Ing., D-64367 Mühltal (DE); Schwarz, Hermann, D-64285 Darmstadt (DE); Yadegardjam, Farsin, Dipl. Ing., D-64293 Darmstadt (DE)
(74) Vertreter: Kasseckert, Rainer

(56) Entgegenhaltungen:
- EP-A- 0 189 155
- DE-A- 2 838 386
- US-A- 3 649 534
- US-A- 5 364 538

## Beschreibung

Die Erfindung betrifft ein Verfahren zur chemisch-oxidativen Behandlung eines organische Bestandteile enthaltenden Mediums.

Unter einem organische Bestandteile enthaltenden Medium sind z.B. Schlämme zu verstehen, die bei einer biologischen Reinigung von Abwasser anfallen. Beispielsweise fällt auf Kläranlagen Primärschlamm an, der bei einer Vorklärung des Abwassers entsteht. Außerdem entsteht in der biologischen Reinigungsstufe der Kläranlage Überschußschlamm. Schließlich fällt noch in Faultürmen von Kläranlagen Faulschlamm an. Üblicherweise werden diese Schlämme dadurch entsorgt, daß sie deponiert, verbrannt oder auf Felder ausgebracht werden. Der zur Verfügung stehende Deponieraum wird allerdings immer knapper, wodurch diese Entsorgungsart ständig verteuert wird. Eine Verbrennung der Schlämme erfordert einen hohen Energieaufwand. Außerdem werden dabei über die Abluft Schadstoffe an die Umwelt abgegeben. Auch die Ausbringung auf die Felder ist problematisch, da die Gefahr einer Verseuchung der Böden mit Schwermetallen besteht.

In der vorliegenden Patentanmeldung sollen unter organische Bestandteile enthaltenden Medien neben Schlämmen aus Kläranlagen auch Abwässer, Sickerwässer aus Mülldeponien, mit organischen Schadstoffen belastete Erdböden usw. verstanden werden. Beispielsweise kann verseuchtes Erdreich mit Wasser aufgeschlämmt und ähnlich wie Klärschlamm behandelt werden.

Ein bekanntes Verfahren, die organischen Bestandteile solcher Medien auf chemischoxidativem Weg abzubauen, ist die sogenannte Naßoxidation. Unter Naßoxidation versteht man die Umsetzung von (Luft-) Sauerstoff mit organischen Verbindungen in wäßriger Phase bei Temperaturen von 150-370°C und Drücken im Bereich von 10-220 bar. Ein solches Verfahren ist beispielsweise in der DE-B2-27 28 554 beschrieben. Aufgrund der erforderlichen hohen Temperaturen und Drücke verursachen die herkömmlichen Verfahren zur Naßoxidation allerdings hohe Investitions- und Betriebskosten. Bei Verfahren zur Naßoxidation, die im unteren Temperaturbereich von 150-175°C und bei Drücken von 10-20 bar arbeiten, muß zusätzlich ein Katalysator zugegeben sowie der pH-Wert auf 0,5-1,5 erniedrigt werden, um die Oxidationsreaktionen zu ermöglichen. Außerdem ist bei diesen Niederdruckverfahren keine vollständige Oxidation der organischen Bestandteile erreichbar, was einen zusätzlichen nachgeschalteten Reinigungsprozeß erfordert.

Aus der DE-A 2 838 386 ist ein Verfahren zur Schlammbehandlung bekannt, bei dem der Schlamm nach Einstellung eines niedrigen pH-Wertes erhitzt und anschließend dem Schlamm ein Oxidationsmittel, insbesondere Wasserstoffperoxid, zugemischt wird.

Der vorliegenden Erfindung liegt die Aufgabe zugrunde, ein Verfahren zur Verfügung zu stellen, mit dem organische Bestandteile enthaltende Medien auf wirtschaftliche Weise möglichst umweltfreundlich entsorgt werden können.

Diese Aufgabe wird erfindungsgemäß dadurch gelöst, daß
a) das Medium in einem ersten Verfahrensschritt auf eine in einem ersten vorgegebenen, niedrigen Temperaturbereich zwischen 70 und 110°C liegende Temperatur aufgeheizt und während einer ersten vorgegebenen Behandlungsdauer von mindestens 10 Minuten in diesem Temperaturbereich gehalten wird,
b) das Medium in einem zweiten Verfahrensschritt auf eine in einem zweiten vorgegebenen, niedrigen Temperaturbereich zwischen 140 und 200°C liegende Temperatur bei einem Druck im Bereich zwischen 3 und 30 bar gebracht wird und während einer zweiten vorgegebenen Behandlungsdauer von mindestens 10 Minuten in diesem Temperatur- und Druckbereich gehalten wird, wobei das Medium zumindest zeitweise mit einem sauerstoffhaltigen Gas begast wird, und
c) zwischen dem ersten und zweiten Verfahrensschritt und/oder während des zweiten Verfahrenschrittes Wasserstoffperoxid dem Medium zugegeben wird.

Zweckmäßigerweise wird für den ersten Verfahrensschritt ein Temperaturbereich deutlich unterhalb der bei Naßoxidationsverfahren üblichen Temperaturen, also deutich unterhalb von 150°C, vorgegeben, während für den zweiten Verfahrensschritt Temperatur- und Druckbereiche zur Anwendung kommen, die ungefähr an der Untergrenze der bei Niederdrucknaßoxidationsverfahren üblichen Temperatur- und Druckbereiche liegen.

Demgemäß werden bevorzugt im ersten Verfahrensschritt ein Temperaturbereich von ca. 80 - ca. 110°C sowie eine Behandlungsdauer von mindestens 20 Minuten und im zweiten Verfahrensschritt ein Temperaturbereich von ca. 140 - ca. 160°C, ein Druckbereich von ca. 5 - ca. 15 bar sowie eine Behandlungsdauer von mindestens 20 Minuten vorgegeben.

Vorzugsweise wird eine Behandlungsdauer von jeweils einer Stunde im ersten und zweiten Verfahrensschritt nicht überschritten.

Es hat sich herausgestellt, daß besonders gute Ergebnisse hinsichtlich des Abbaus der organischen Bestandteile des Mediums sowie der Volumenverringerung des Mediums erreicht werden, wenn bestimmte enge Grenzen für den Temperatur- und Druckbereich sowie die Behandlungsdauer eingehalten werden. So wird das Medium gemäß einer besonders bevorzugten Ausführungsform der Erfindung im ersten Verfahrensschritt auf ca. 90 - ca. 100°C aufgeheizt und ca. 30 Minuten auf dieser Temperatur gehalten und im zweiten Verfahrensschritt auf ca. 150°C aufgeheizt, unter einen Druck von ca. 10 bar gesetzt und ca. 30 Minuten auf dieser Temperatur und unter diesem Druck gehalten.

Der vorliegenden Erfindung liegt die Erkenntnis zugrunde, daß durch eine Kombination eines Verfahrens, das einer Naßoxidation bei niedrigen Temperaturen und Drükken entspricht, und einer chemischen Behandlung mit Wasserstoffperoxid ein sehr weitgehender Abbau von organischen Bestandteilen des zu behandelnden Mediums und eine sehr starke Volumenverringerung des Feststoffanteils des Mediums erreichbar ist. Es hat sich gezeigt, daß sich die einzelnen Reaktionsmechanismen bei einem derartigen Verfahren gegenseitig so beeinflussen, daß bei einer bestimmten Kombination von Temperaturbereich, Druckbereich und Behandlungsdauer besonders gute Ergebnisse erzielt werden können.

Eine zusätzliche Aktivierung des Wasserstoffperoxids durch UV-Bestrahlung oder Zugabe eines Katalysators ist bei dem erfindungsgemäßen Verfahren nicht erforderlich.

Wesentlich ist auch, daß das Medium in einem ersten Verfahrensschritt zunächst auf einen vorgegebenen Temperaturbereich aufgeheizt und während einer vorgegebenen Behandlungsdauer in diesem Temperaturbereich gehalten wird. Insbesondere Schlämme aus der biologischen Abwasserreinigung enthalten nämlich ein Enzym, das mit Katalase bezeichnet wird und die Eigenschaft aufweist, Wasserstoffperoxid zu zersetzen, ohne dabei selbst angegriffen zu werden. Durch die Vorbehandlung des Mediums im ersten Verfahrensschritt wird dieses Enzym zuverlässig zerstört.

Vermutlich liegen dem erfindungsgemäßen Verfahren folgende Wirkungsmechanismen zugrunde:

Die Vorbehandlung im ersten Verfahrensschritt bewirkt zunächst eine Zerstörung der Katalase, so daß im zweiten Verfahrensschritt Wasserstoffperoxid zugegeben werden kann, ohne eine Zersetzung des Wasserstoffperoxids befürchten zu müssen. Durch die Temperaturerhöhung im zweiten Verfahrensschritt wird dann eine Aktivierung des Wasserstoffperoxids erreicht, so daß vermehrt Hydroxylradikale gebildet werden. Gleichzeitig verarmt das Medium an Wasserstoffperoxid und es kommt verstärkt zu Oxidationsreaktionen. Parallel zur Oxidation verläuft eine Rekombination der Hydroxylradikale, die nicht zur Oxidation beiträgt. Das Verhältnis zwischen der Oxidationsreaktion und der Rekombination ist temperaturabhängig.

Mit zunehmender Temperatur findet eine beschleunigte Radikalbildung statt. Gleichermaßen verschiebt sich auch das Verhältnis von der Oxidationsreaktion zur Rekombinationsreaktion. Steigende Hydroxylradikalkonzentrationen machen eine Rekombination wahrscheinlicher. Ab einer bestimmten Temperatur kehrt sich das Verhältnis um, die Rekombination überwiegt dann die Oxidation.

Parallel zu dem beschriebenen Oxidationsprozeß läuft ein zweiter Oxidationsprozeß ab, der dem Prinzip der Niederdruck-Naßoxidation zuzuordnen ist, also der Oxidation durch gelösten Sauerstoff bei erhöhter Temperatur und erhöhtem Druck.

Bei einer Temperatur von 150°C dürfte sich die Oxidation des Mediums, beispielsweise von Belebtschlamm aus einer biologischen Kläranlage, zu 1/3 aus der Naßoxidation und zu 2/3 aus der Oxidation durch Wasserstoffperoxid zusammensetzen.

Die dem erfindungsgemäßen Verfahren zugrundeliegenden Wirkungsmechanismen sind in der folgenden Tabelle zusammengefaßt:

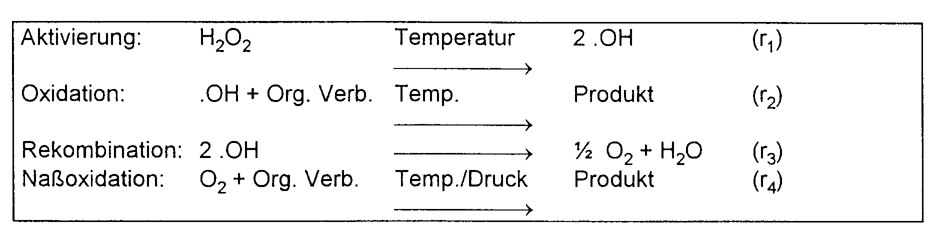

Während der Behandlung des Mediums im zweiten Verfahrensschritt wird vorzugsweise ein pH-Wert des Mediums von ca. 3 - ca. 4 eingehalten.

Zweckmäßigerweise wird das Medium während des zweiten Verfahrensschritts z.B. durch Rühren oder Einblasen eines Gases durchmischt, um einen guten Stoffübergang zu gewährleisten. Besonders bevorzugt wird das Medium in Turbulenzen versetzt, während es mit dem sauerstoffhaltigen Gas begast wird.

Die Begasung mit dem sauerstoffhaltigen Gas kann kontinuierlich über die gesamte Behandlungsdauer während des zweiten Verfahrensschritts oder diskontinuierlich, gegebenenfalls auch mit unterschiedlicher Intensität, durchgeführt werden. Als sauerstoffhaltiges Gas kann Luft eingesetzt werden. Vorzugsweise wird sauerstoffangereicherte Luft oder technisch reiner Sauerstoff verwendet.

Das Wasserstoffperoxid kann ebenfalls kontinuierlich oder absatzweise zugegeben werden. Vorzugsweise wird das Wasserstoffperoxid zu Beginn des zweiten Verfahrensschritts in einer Menge zugegeben, die die gewünschte Oxidation der organischen Bestandteile des Mediums erlaubt. Die Zugabemenge wird auf den jeweiligen Anwendungsfall und die jeweilige Beschaffenheit des zu behandelnden Mediums abgestimmt, wobei von einer linearen Korrelation zwischen steigendem Oxidationsgrad und zunehmender Wasserstoffperoxid-Konzentration ausgegangen werden kann.

Das erfindungsgemäße Verfahren weist gegenüber dem Stand der Technik entscheidende Vorteile auf:

Da im Vergleich zu den üblichen Naßoxidationsverfahren beim vorgeschlagenen Verfahren sehr niedrige Temperaturen und Drücke sowie kurze Behandlungszeiten ausreichen, arbeitet das Verfahren sehr viel kostengünstiger. Es ist auch keine pH-Absenkung auf 0,5-1,5 notwendig, wie dies bei den bekannten Niederdruck-Naßoxidationsverfahren der Fall ist. Es kann bei dem erfindungsgemäßen Verfahren mit einem pH-Wert von ca. 3 - ca. 4 gearbeitet werden. Da sich in diesem Bereich auch der natürliche pH-Wert von Klärschlamm bewegt, kann unter Umständen völlig auf Neutralisationsmittel verzichtet werden. Zumindest ist aber sehr viel weniger Neutralisationsmittel notwendig als bei den bekannten Niederdruck-Naßoxidationverfahren. Außerdem ist beim erfindungsgemäßen Verfahren im Gegensatz zu den bekannten Niederdruck-Naßoxidationsverfahren keine Zugabe von Katalysatoren, wie z.B. Eisen, notwendig. Auch eine zusätzliche Aktivierung des Wasserstoffperoxids durch UV-Bestrahlung ist nicht erforderlich.

Bei der Behandlung von bei der biologischen Abwasserreinigung anfallenden Schlämmen erlaubt das vorgeschlagene Verfahren gleichzeitig eine Verminderung des Schlammvolumens, eine bessere Entwässerbarkeit sowie eine Hygienisierung und AOX-Verminderung der Schlämme. Deshalb können die behandelten Schlämme z.B. als Nährstoff in der Land- und Forstwirtschaft genutzt werden, so daß eine Rückführung in den natürlichen Kreislauf möglich ist. Die behandelten Schlämme können also als Dünger verwertet werden.

Das Verfahren kann in allen biologischen Anlagen angewandt werden, bei denen Probleme im Zusammenhang mit der Behandlung und der Beseitigung von Schlämmen aus der Vorklärung, der biologischen Reinigungsstufe oder der Schlammfaulung auftreten. Aufgrund der mit dem erfindungsgemäßen Verfahren erreichten guten Entwässerbarkeit der behandelten Schlämme und einer Reduzierung der Schlammenge auf etwa die Hälfte (ausgedrückt als Trockensubstanz) entsteht ein geringes Restschlammvolumen. Bei höherer Wasserstoffperoxidzugabe, z.B. einer Menge von 1/3 der zur vollständigen Oxidation notwendigen Wasserstoffperoxidmenge, nimmt die Trockensubstanz von Belebtschlamm um etwa 2/3 ab.

Außerdem läßt sich das Verfahren mit Vorteil bei der Abwasserbehandlung, Sickerwasseraufbereitung und Bodensanierung einsetzen. Wird das Verfahren bei der Bodensanierung verwendet, so wird das ausgehobene Erdreich zweckmäßigerweise zunächst mit Wasser zu einer Bodensuspension aufgeschlämmt, welche dann analog zum Klärschlamm mit dem erfindungsgemäßen Verfahren behandelt werden kann.

Das erfindungsgemäße Verfahren kann besonders bevorzugt zur Vorreinigung von Abwasser eingesetzt werden. Bei der biologischen Abwasserreinigung von Industrieabwässern wird z. B. ein nicht unerheblicher Teil von Abwasserinhaltsstoffen nicht oder nur ungenügend durch die Mikroorganismen abgebaut. Diese sog. refraktären, chemischen Verbindungen gelangen somit in den Vorfluter, wo sie zu den bekannten negativen Auswirkungen, wie z. B. starker Sauerstoffzehrung mit Fischsterben, Bildung übler Gerüche usw. führen. Andererseits werden diese refraktären Stoffe ebenfalls adsorptiv an den Belebtschlämmen angereichert, welche daraufhin als Sondermüll mit hohem Kostenaufwand entsorgt werden müssen.

Wird das erfindungsgemäße Verfahren zur Vorreinigung solcher Abwässer engesetzt, so kann eine nahezu vollständige Beseitigung der refraktären Verbindungen erzielt werden. Dies geschieht in wesentlich kürzerer Zeit und weitaus vollständiger als bei der herkömmlichen biologischen Reinigung. Dabei wird jedoch das Hauptaugenmerk darauf gelegt, die Oxidation nach Möglichkeit partiell nur soweit zu führen, bis die refraktären Verbindungen dermaßen aufbereitet werden, daß sie biologisch und damit kostengünstig abgebaut werden können. Das Verfahren ist in diesem Fall als Vorbehandlungsschritt vor einer biologischen Behandlung oder einer sonstigen weitergehenden Behandlung zu sehen.

Die Vorreinigung des Abwassers wird vorzugsweise folgendermaßen durchgeführt:

Die refraktären Verbindungen werden vor der Einleitung in eine biologische (oder anderweitige) Reinigungsstufe chemisch-oxidativ aufbereitet, so daß nur noch biologisch abbaubare Verbindungen in diese weitergehende Abwasserreinigungsstufe gelangen. Die Oxidation wird durch eine Kombination von Luftsauerstoff bzw. technischem Sauerstoff und Wasserstoffperoxid erreicht. Die Reaktion wird zweckmäßigerweise in einem Autoklaven, der semikontinuierlich betrieben wird, durchgeführt. Die eingesetzte Wasserstoffperoxidmenge ist in Relation zum Chemischen Sauerstoffbedarf (CSB) unterstöchiometrisch, d. h. äußerst kostengünstig. Das Verfahren arbeitet bei erhöhtem Druck zwischen 10 und 20 bar und in einem Temperaturbereich von 100 bis 150°C. Die Reaktionszeiten betragen nur wenige Minuten, die Reaktion findet bevorzugt im Sauren statt. Besonders bemerkenswert ist die Tatsache, daß auf jeglichen Katalysatoreinsatz verzichtet werden kann, ein zusätzlicher Verfahrensschritt zur Abtrennung, Weiterbehandlung und/oder Rückgewinnung des Katalysators ist somit nicht notwendig.

Eine derartige Vorreinigung bietet eine Reihe von Vorteilen:

Die Reaktionsbedingungen sind milder als bei herkömmlichen Oxidationsprozessen, es wird trotzdem überraschenderweise kein Katalysator benötigt. Druck, Temperatur und Reaktionszeiten sind gering. Besonders vorteilhaft ist die Tatsache, daß durch die Reaktionsbedingungen bewirkt, sonst übliche Korrosionsprobleme und Einsatz von hoch korrosivresistenten, teuren Materialien vermieden werden.

Anwendungsmöglichkeiten für das Verfahren ergeben sich bevorzugt bei Produktionsabwässern der Industrie, welche nur unvollständig gereinigt werden können. Der einfache apparative Aufwand bei geringem Platzbedarf ermöglicht einen Einsatz in bereits bestehende Abwasserreinigungsanlagen.

Im folgenden wird die Erfindung anhand eines Ausführungsbeispiels, das die Behandlung von Belebtschlamm aus einer biologischen Kläranlage betrifft, näher erläutert:

Der beispielsweise als Überschußschlamm aus einer biologischen Kläranlage abgezogene Schlamm wird in einen Reaktor eingeleitet, wo er zunächst auf 100°C für etwa eine halbe Stunde erhitzt wird, um das Enzym Katalase zu zerstören. Anschließend wird der Schlamm zur Durchführung des zweiten Verfahrensschritts in einen Rühr-Autoklaven gepumpt. Nun wird dem Schlamm eine vorbestimmte Menge an Wasserstoffperoxid zugegeben. Diese Menge hängt vom gewünschten Oxidationsgrad des behandelten Schlammes ab. Außerdem wird im Schlamm ein pH-Wert von 3 durch Zugabe einer geringen Menge an konzentrierter Schwefelsäure eingestellt. Der Schlamm wird auf eine Temperatur von 150°C aufgeheizt und unter einen Druck von 10 bar gesetzt. Für eine Behandlungsdauer von 30 Minuten wird der Schlamm auf dieser Temperatur und unter diesem Druck gehalten. Um einen guten Stoffübergang zu gewährleisten, wird der Schlamm während der Behandlungsdauer gerührt und mit einem sauerstoffhaltigen Gas, vorzugsweise mit Sauerstoff angereicherter Luft oder technisch reinem Sauerstoff, begast.

Nach 30 Minuten Behandlungszeit im Rühr-Autoklaven wird der Schlamm entnommen und kann einer weiteren Verwertung zugeführt werden. Der behandelte Schlamm hat völlig andere Eigenschaften als der unbehandelte Schlamm. Der behandelte Schlamm setzt sich schnell ab, kann also gut entwässert werden. Außerdem findet während der Behandlung eine Hygienisierung des Schlamms statt, da pathogene Keime und Wurmeier im Reaktor sicher abgetötet werden. Als weiterer Vorteil ist eine Reduzierung von AOX zu nennen, da halogenierte organische Verbindungen zerstört werden. Generell werden während der Behandlung große organische Moleküle, die biologisch resistent (refraktär) sind, in kleinere, biologisch abbaubare Moleküle aufgespalten. Vom behandelten Schlamm kann eine wäßrige Phase abgetrennt werden, die vornehmlich Carbonsäuren enthält, welche einen erheblichen Teil des nicht zerstörten CSB (chemischen Sauerstoffbedarfs) ausmachen. Die Carbonsäuren sind biologisch leicht abbaubar, so daß die Flüssigphase in eine biologische Kläranlage zurückgeführt werden kann. Dadurch unterscheidet sich das erfindungsgemäße Verfahren grundsätzlich von anderen Verfahren, bei denen Schlammfiltrate mit einem hohen refraktären CSB-Anteil erzeugt werden, die im biologischen Teil einer Kläranlage nicht mehr abgebaut werden können.

Geht man davon aus, daß Wasserstoffperoxid im Gewichtsverhältnis 1:1 zur Trockensubstanz eingesetzt wird und die genannten Betriebsparameter eingehalten werden, so werden eine Abnahme des Gesamt-CSB-Gehalts des Schlamms um ca. 90 % sowie eine Verringerung des Schlammvolumens um ca. 60 % erreicht.

Das vorliegende Ausführungsbeispiel betrifft eine diskontinuierliche Betriebsweise, bei der der Reaktor zur Durchführung des ersten Verfahrensschritts und der Rühr-Autoklav zur Durchführung des zweiten Verfahrensschritts chargenweise mit dem Schlamm beaufschlagt werden. Es ist aber auch eine kontinuierliche Betriebsweise möglich, wobei der Schlamm zur Durchführung des ersten Verfahrensschritts zunächst durch einen ersten Reaktor und dann zur Durchführung des zweiten Verfahrensschritts durch einen zweiten Reaktor hindurchgeführt wird.

Außerdem ist es möglich, nur einen einzigen Reaktor zur Durchführung beider Verfahrensschritte einzusetzen. Dabei wird der Schlamm in dem Reaktor zunächst auf 100°C erhitzt, um das Enzym Katalase zu zerstören. Nach 30minütiger Behandlungszeit bei dieser Temperatur wird eine vorbestimmte Menge an Wasserstoffperoxid in den Reaktor eingegeben. Dann wird der Reaktor auf 150°C weiter aufgeheizt und unter einen Druck von 10 bar gesetzt. Auf dieser Temperatur und unter diesem Druck wird der Reaktor 30 Minuten lang gehalten. Während dieser Zeit wird der Schlamm in dem Reaktor umgerührt und mit einem sauerstoffhaltigen Gas, insbesondere mit Sauerstoff angereicherter Luft oder technisch reinem Sauerstoff, begast. Der pH-Wert des Schlammes wird auf 3 eingestellt. Nach einer 30minütigen Behandlungszeit wird überstehende Flüssigphase abgezogen und einer biologischen Kläranlage zugeführt. Der Schlamm wird dem Reaktor entnommen und kann nach Entwässerung einer weiteren Verwertung zugeführt werden.

## Patentansprüche

1. Verfahren zur chemisch-oxidativen Behandlung eines organische Bestandteile enthaltenden Mediums, **dadurch gekennzeichnet, daß**
a) das Medium in einem ersten Verfahrensschritt auf eine in einem ersten vorgegebenen, niedrigen Temperaturbereich zwischen 70 und 110°C liegende Temperatur aufgeheizt und während einer ersten vorgegebenen Behandlungsdauer von mindestens 10 Minuten in diesem Temperaturbereich gehalten wird,
b) das Medium in einem zweiten Verfahrensschritt auf eine in einem zweiten vorgegebenen, niedrigen Temperaturbereich zwischen 140 und 200°C liegende Temperatur bei einem Druck im Bereich zwischen 3 und 30 bar gebracht wird und während einer zweiten vorgegebenen Behandlungsdauer von mindestens 10 Minuten in diesem Temperatur- und Druckbereich gehalten wird, wobei das Medium zumindest zeitweise mit einem sauerstoffhaltigen Gas begast wird, und
c) zwischen dem ersten und zweiten Verfahrensschritt und/oder während des zweiten Verfahrenschrittes Wasserstoffperoxid dem Medium zugegeben wird.

2. Verfahren nach Anspruch 1, dadurch gekennzeichnet, daß im ersten Verfahrensschritt ein Temperaturbereich von ca. 80 - ca. 110°C sowie eine Behandlungsdauer von mindestens 20 Minuten und im zweiten Verfahrensschritt ein Temperaturbereich von ca. 140 - ca. 160°C, ein Druckbereich von ca. 5 - ca. 15 bar sowie eine Behandlungsdauer von mindestens 20 Minuten vorgegeben werden.

3. Verfahren nach Anspruch 1, dadurch gekennzeichnet, daß das Medium im ersten Verfahrensschritt auf ca. 90 - ca. 100°C aufgeheizt und ca. 30 Minuten auf dieser Temperatur gehalten wird und im zweiten Verfahrensschritt auf ca. 150°C aufgeheizt und unter einen Druck von ca. 10 bar gesetzt und ca. 30 Minuten auf dieser Temperatur und unter diesem Druck gehalten wird.

4. Verfahren nach einem der Ansprüche 1 bis 3, dadurch gekennzeichnet, daß während des zweiten Verfahrensschrittes ein pH-Wert des Mediums von ca. 3 - 4 eingehalten wird.

5. Verfahren nach einem der Ansprüche 1 bis 4, dadurch gekennzeichnet, daß das Medium während des zweiten Verfahrensschrittes durchmischt wird.

6. Verfahren nach einem der Ansprüche 1 bis 5, dadurch gekennzeichnet, daß im zweiten Verfahrensschritt anfallende Flüssigphase abgezogen und einer biologischen Reinigung unterzogen wird.

7. Verfahren nach einem der Ansprüche 1 bis 6, dadurch gekennzeichnet, daß als Medium refraktäre Verbindungen aufweisendes Abwasser verwendet wird, das im ersten und zweiten Verfahrensschritt soweit aufbereitet wird, daß die refraktären Verbindungen in biologisch abbaubare Verbindungen überführt werden, die in einer nachgeschalteten biologischen Reinigungsstufe abgebaut werden.

## Claims

1. Process for chemical oxidative treatment of a medium containing organic constituents, characterized in that
a) the medium is heated in a first process step to a temperature within a first preset low temperature range between 70 and 110°C and kept in this temperature range for a first preset treatment duration of at least 10 minutes,
b) the medium, in a second process step, is brought to a temperature within a second preset low temperature range between 140 and 200°C at a pressure within the range between 3 and 30 bar and kept in this temperature and pressure range for a second preset treatment duration of at least 10 minutes, an oxygen-containing gas being introduced into the medium at least intermittently, and
c) between the first and second process step and/or during the second process step, hydrogen peroxide is added to the medium.

2. Process according to Claim 1, characterized in that, in the first process step, a temperature range of approximately 80 to approximately 110°C and a treatment duration of at least 20 minutes and, in the second process step, a temperature range of approximately 140 to approximately 160°C, a pressure range of approximately 5 to approximately 15 bar and a treatment duration of at least 20 minutes are preset.

3. Process according to Claim 1, characterized in that, in the first process step, the medium is heated to approximately 90 to approximately 100°C and is kept at this temperature for approximately 30 minutes and, in the second process step, the medium is heated to approximately 150°C and pressurized to approximately 10 bar and kept at this temperature and this pressure for approximately 30 minutes.

4. Process according to any of Claims 1 to 3, characterized in that a pH of the medium of approximately 3-4 is maintained during the second process step.

5. Process according to any of Claims 1 to 4, characterized in that the medium is thoroughly mixed during the second process step.

6. Process according to any of Claims 1 to 5, characterized in that liquid phase arising in the second process step is taken off and subjected to a biological cleanup.

7. Process according to any of Claims 1 to 6, characterized in that the medium used is wastewater which contains refractory compounds and which is processed in the first and second process steps so that the refractory compounds are converted into biodegradable compounds which are degraded in a subsequent biological cleanup stage.

## Revendications

1. Procédé de traitement chimico-oxydatif d'un milieu contenant des composants organiques, caractérisé en ce que :
a) le milieu est, dans une première étape de procédé, chauffé à une température se situant dans un premier intervalle prédéfini de basses températures entre 70 et 110°C et maintenu durant un premier temps de traitement prédéfini à au moins 10 minutes dans cet intervalle de températures;
b) le milieu est, dans une deuxième étape de procédé, amené à une température se situant dans un deuxième intervalle prédefini de basses températures entre 140 et 200°C à une pression se situant dans un intervalle entre 3 et 30 bars et maintenu durant un deuxième temps de traitement prédéfini d'au moins 10 minutes dans ces intervalles de températures et de pressions, le milieu étant au moins momentanément gazé avec un gaz contenant de l'oxygène, et
c) l'on ajoute du peroxyde d'hydrogène au milieu entre les première et deuxième étapes de procédé et/ou au cours de la deuxième étape de procédé.

2. Procédé suivant la revendication 1, caractérisé en ce que l'on définit, dans la première étape de procédé, un intervalle de températures d'environ 80 à environ 110°C ainsi qu'un temps de traitement d'au moins 20 minutes et, dans la deuxième étape de procédé, un intervalle de températures d'environ 140 à environ 160°C, un intervalle de pressions d'environ 5 à environ 15 bars, ainsi qu'un temps de traitement d'au moins 20 minutes.

3. Procédé suivant la revendication 1, caractérisé en ce que, dans la première étape de procédé, le milieu est chauffé à environ 90 à environ 100°C et maintenu à cette température durant environ 30 minutes et, dans la deuxième étape de procédé, il est chauffé à environ 150°C et soumis à une pression d'environ 10 bars et maintenu à cette température et sous cette pression durant environ 30 minutes.

4. Procédé suivant l'une quelconque des revendications 1 à 3, caractérisé en ce que l'on maintient au cours de la deuxième étape de procédé un pH du milieu d'environ 3-4.

5. Procédé suivant l'une quelconque des revendications 1 à 4, caractérisé en ce que le milieu est soigneusement mélangé au cours de la deuxième étape de procédé.

6. Procédé suivant l'une quelconque des revendications 1 à 5, caractérisé en ce que la phase liquide obtenue dans la deuxième étape de procédé est retirée et soumise à une purification biologique.

7. Procédé suivant l'une quelconque des revendications 1 à 6, caractérisé en ce que le milieu utilisé est constitué d'eaux usées comprenant des éléments réfractaires, qui sont traitées dans les première et deuxième étapes de procédé de telle sorte que les composés réfractaires soient transformés en composés biodégradables qui sont décomposés dans une étape de purification biologique ultérieure.
